# EUROPÄISCHE PATENTANMELDUNG

(11) **EP 1 091 596 A2**
(43) Veröffentlichungstag der Anmeldung: **11.04.2001**
(21) Anmeldenummer: 00121762.9
(22) Anmeldetag: 05.10.2000
(51) Int. Cl.: H04Q 3/00

(54) **Erweiterter Management-Notification-Dienst zur Reduzierung der Kommunikation zwischen Agent und Manager**

(30) Priorität: 05.10.1999 DE 19947893
(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung bezieht sich auf ein Verfahren zur Nachrichtenübertragung an einer Schnittstelle in einer objektorientieren Umgebung insbesondere eines Kommunikationssystems, z.B. einem Mobiltunk-Netz, wo zwischen zumindest einem Agent und zumindest einem Manager Objektereignis-Nachrichten übermittelt werden, mittels derer jeweils Ereignisse einer einzelnen Objektinstanz mitgeteilt werden.

Zur erheblichen Reduzierung der Anzahl übertragener Objektereignis-Nachrichten wird vorgeschlagen, daß Objektereignisse-Nachrichten zwischen Agent zum Manager übermittelt werden, die jeweils mehrere Ereignisse mitteilen, die sich auf verschiedene Objektinstanzen auch von unterschiedlichen Objektklassen beziehen. Die Objektereignisse-Nachrichten entsprechen dabei einer um vorzugsweise drei Parameter erweiterten CMISE-Notification-Dienst-Nachricht. Die Objektauswahl auf einzelnen Objektebenen erfolgt damit z.B. entsprechend der ITU-T X.710-Scoping-Funktionalität.

## Beschreibung

Die Erfindung betrifft die Kommunikation zwischen Agent und Manager in einer objektorientierten Umgebung mit den oberbegrifflichen Merkmalen des Anspruchs 1. Die Erfindung bezieht sich dabei insbesondere auf das Management von Telekommunikationssystemen.

Die TMN-Prinzipien (TMN: Telecommunications Management Network bzw. Telekommunikations-Managementnetz) definieren mehrere Managementebenen für das Management eines Kommunikationssystems - beispielsweise eines Mobil-Kommunikationssystems -, wobei jede Ebene eine doppelte Funktion hat. In einer aus mehreren Ebenen bestehenden Management-Hierarchie hat jede Ebene außer der untersten eine Managerfunktion für die darunterliegende Ebene. Außerdem hat jede Ebene außer der obersten eine Agentenfunktion für die nächst höhere Ebene.

In einer objekt-orientierten Umgebung gibt es eine Vielzahl von Objekten mit jeweils einer bestimmten Funktionalität. Bei der objekt-orientierten Umgebung, wie sie typischerweise zwischen Manager und Agent in einem Mobilfunknetz besteht, wird entsprechend jede Ressource von einem bestimmten Objekt bereitgestellt, das als gemanagtes Objekt bzw. Objekt-Instanz einer Objektklasse verfügbar ist.

Das Objekt entsteht als Ergebnis einer Modellierungs-Tätigkeit, bei der neben der Funktionalität u.a. die Parameter und Rahmenbedingungen definiert werden, und ist sowohl dem Manager als auch dem ausführenden Agent an der entsprechenden Schnittstelle bekannt. Die Schnittstelle kann z.B. bei einem Mobilfunknetz die sogenannte O-Schnittstelle zwischen einem Betriebs- und Wartungszentrum (OMC) und einem Basisstationssystem (BSS) sein.

Eine Objektinstanz einer bestimmten gemanagten Klasse A, die auch als managed object class bezeichnet wird, kann weitere Objektinstanzen derselben oder anderer Klassen enthalten. Eine solche Beziehung zwischen Objektinstanzen - nicht Klassen - wird in der Modellierung auch als "containment relationship" (bzw. Einschließungsbeziehung) bezeichnet.

Eine Beziehung zwischen Objektklassen, die spezifiziert, daß eine Objektinstanz einer Klasse als übergeordnetes (SUPERIOR) Objekt für Objekte einer anderen Klasse definiert ist oder definiert sein kann, wird auch als "NAME BINDING" (bzw. Bezeichnungsbindung) bezeichnet. Eine hierarchische Zuordnung von Objekten, in der die Hierarchie auf Grundlage von NAME-BINDING-Beziehungen organisiert ist, wird allgemein als Bezeichnungsbaum bzw. "naming tree" bezeichnet.

Als Beispiel für eine Funktionalität zwischen Manager und Agent sei das Erzeugen einer Objektinstanz aufgeführt. Üblicherweise wird eine neue Objektinstanz im Agent explizit generiert. Dies erfolgt mit Hilfe eines entsprechendes Erzeuge- bzw. CREATE-Kommandos (gemäß Standard ITU-T X.710 "Common Management Information Service Definition"), das vom Manager über die Manager-Agent-Schnittstelle zum Agent gesendet wird.

Der Standard ITU-T X.710 (CMISE: Common Management Information Service Element/Definition für CCITT-Anwendungen; ITU-T: International Telecommunication Union - Telecommunication Sector) definiert einen Satz von sogenannten Dienstprimitiven (Application Service Element), die einen Austausch von Informationen und Kommandos zwischen Anwendungsprozessen in einer objekt-orientierten Management-Umgebung ermöglichen. In einer solchen Umgebung werden System-Resourcen als Objektinstanzen modelliert, die bestimmte Eigenschaften (Attribute) vorweisen, Kommandos (Actions) empfangen und spontane Ereignisse (Notifications) melden können.

Jeder Anwendungsprozeß enthält einen sogenannten CMISE-Service-User bzw. CMISE-Dienste-Anwender, der die CMISE-Dienste nutzt. Zum Informationstransfer für das Management von Systemen (z.B. Telekommunikationsnetzen) werden zwei Arten von CMISE-Diensten zur Verfügung gestellt:

Der erste Dienst ist eine Management-Notification bzw. Managementbenachrichtigung. Der Standard definiert diesbezüglich einen Dienst (N-EVENT-REPORT), mit dem ein CMISE-Service-User, z.B. ein Agent, ein spontanes Ereignis an einen anderen CMISE-Service-User meldet, z.B. einen Manager. Solche Ereignisse sind z.B. das Generieren / Löschen einer Objektinstanz (object creation / object deletion) oder die Änderung von Attribut- und/oder Zustandswerten eines Objektes (attribute value change / state change).

Der zweite Dienst ist eine Management-Operation. Diesbezüglich definiert der Standard hier mehrere Dienste (z.B. M-GET, M-SET, M-ACTION, M-CREATE, M-DELETE), die einem CMISE-Service-User, wie z.B. einem Manager, ermöglichen, Informationen im Agent zu lesen oder zu verändern bzw. Objektinstanzen zu generieren oder zu löschen.

Während sich eine Management-Operation (mit Ausnahme von M-CREATE) auf mehrere Objekte beziehen kann, begrenzt der Standard die Verwendung des Management-Notification-Dienstes immer auf eine einzige Objektinstanz. Diese Einschränkung ist für das Management von Telekommunikationsnetzen in vielen Fällen sehr nachteilig, wie die folgende Beispiele zeigen:
* In einem komplexen Management-System kommt es vor, daß das (explizite) Generieren einer neuen Objektinstanz das implizite Kreieren mehrerer Instanzen von untergeordneten Objektklassen zur Folge hat. In diesem Fall wird für jede einzelne implizit erzeugte Objektinstanz je eine eigene Objekterzeugungs-Benachrichtigung (object creation notification) über die Agent-Manager-Schnittstelle übertragen.
* Mit Hilfe des M-SET-Dienstes ist ein Operator in der Lage, gleiche Attribute von unterschiedlichen Objektinstanzen mit einem einzigen Kommando zu verändern. Danach sendet jede Objektinstanz eine Attributwert-Änderungsbenachrichtigung (attribute value change notification) an den Manager.
* Nach Unterbrechung und Wiederherstellung einer Manager-Agent-Verbindung muß eine Synchronisierung (alignment) des Informationsstands zwischen Manager und Agent stattfinden. Im Falle von Zustandsynchronisierung (state alignment), sendet der Agent für jede Objektinstanz eine Zustandsänderungs-Benachrichtigung (state change notification), wenn mindestens eines der Zustandsattribute (Verwaltungszustand / administrative state, Betriebszustand / operational state, Anwendungszustand / usage state) vom jeweiligen "Normalwert" abweicht.

Zur Zeit muß somit für jedes management-bezogene Ereignis eine separate Notification an den Manager gesendet werden. Die große Anzahl der einzelnen Benachrichtigungen bzw. Notifications bedeutet nachteilhafterweise eine große Belastung sowohl für die Manager-Agent-Schnittstelle als auch für die Verarbeitungskapazität insbesondere im Manager.

Der Erfindung liegt die Aufgabe zugrunde, ein Verfahren und ein Kommunikationssystem bereitzustellen, bei denen ein Management-Benachrichtigungsdienst zur Kommunikation zwischen Agent und Manager verbessert ist.

Diese Aufgabe wird durch das Verfahren zur Kommunikation zwischen Agent und Manager mit den Merkmalen des Anspruchs 1 bzw. das Kommunikationssystem mit den Merkmalen des Anspruchs 13 gelöst.

Vorteilhafte Weiterbildungen sind Gegenstand von Unteransprüchen.

Vorteilhafterweise ermöglicht der erweiterte Management-Benachrichtigungsdienst die Optimierung der Kommunikation zwischen Agent und Manager durch Reduzierung der Anzahl der Benachrichtigungen durch die Übermittlung mehrerer Ereignisse in einer einzigen Objektereignisse-Nachricht. Der derzeit standardisierte "M-EVENT-REPORT" wäre dann nur als Sonderfall des hier definierten, allgemeinen Dienstes zu sehen.

Die Anzahl der einzelnen Benachrichtigungen bzw. Notifications wird insbesondere dadurch reduziert, daß der Management-Benachrichtigungsdienst derart erweitert wird, daß eine Benachrichtigung Informationen über mehrere Instanzen einer oder auch unterschiedlicher Objektklassen enthalten kann.

Insbesondere beim Management von Kommunikationssystemen, z.B. Mobilfunk-Netzen, werden durch die Reduzierung der Gesamtanzahl zu übertragender Nachrichten Kapazitäten auf der Schnittstelle zwischen Manager und Agent freigehalten. In diesem Fall sind die Objektereignisse-Nachrichten vorzugsweise erweiterte CMISE-Notification-Dienst-Nachrichten bzw. CMISE-Dienst-Ereignisse-Reporte.

Die Einführung von drei zusätzlichen Parametern ermöglicht eine einfache Objektauswahl in Analogie zur für sich bekannten ITU-T X.710-Scoping-Funktionalität. Bei der Auswahl der Werte der zusätzlichen Parameter werden vorteilhafterweise vom containment tree eines zugrundeliegenden Objektmodells ausgehend verschiedene Kriterien zur Auswahl mehrerer Objektinstanzen und/oder Objektebenen festgelegt. Die Parameter können als Auswahlkriterien z.B. eine Ausgangsklasse als Startebene für eine Objektauswahl im containment tree, einen bestimmten Ausgangspunkt (Objektinstanz) als Startpunkt für eine Objektauswahl im containment tree und eventuell einen Bereich mit mehreren Ebenen festlegen, wobei sich die erweiterten CMISE-Notification-Dienst-Nachrichten dann auf Ereignisse innerhalb dieses Bereichs beziehen.

Nachfolgend wird ein Ausführungsbeispiel anhand der Zeichnung näher erläutert. Es zeigen:
- Fig. 1: einen Containment-tree eines Basisstationssystems,
- Fig. 2: eine beispielhafte Ausprägung des in Fig. 1 dargestellten Containment-tree und
- Fig. 3: tabellarisch die Struktur eines erweiterten Management-Benachrichtigungsdienstes.

Das Ausführungsbeispiel beschreibt die Erfindung anhand eines beispielhaften TMN-Konzeptes (TMN: Telecommunications Management Network) für das Management eines Mobil-Kommunikationssystems, das beispielsweise Netzeinrichtungen eines Mobilfunknetzes nach dem GSM-Standard (GSM: Global System for Mobile communication) aufweist. Das Konzept ist aber nicht auf Mobilfunknetze nach insbesondere dem GSM- oder UMTS-Standard (UMTS: Universal Mobile Telecommunication System) beschränkt, sondern läßt sich auf andere Systeme, insbesondere Telekommunikationsnetze jeder Art anwenden, die eine Manager-Agent-Beziehung haben.

Ein Mobil-Kommunikationssystem ist ein hierarchisch gegliedertes System verschiedener Netzeinrichtungen, bei dem die unterste Hierarchiestufe von den Mobilstationen gebildet wird. Diese Mobilstationen kommunizieren über eine Funkschnittstelle mit Funkstationen, die die nächste Hierarchieebene bilden und als Basisstationen bezeichnet werden. Beispielsweise sind Basisstationen, die Mobilstationen in einem Funkbereich einer Funkzelle versorgen, zur Abdeckung eines größeren Funkgebiets zusammengefaßt und mit übergeordneten Netzeinrichtungen, den Basisstationssteuerungen verbunden. Die Basisstationen und Basisstationssteuerungen gehören zu einem Basisstationssystem (BSS: Base Station Subsystem) des Mobil-Kommunikationssystems. Die Basisstationssteuerungen kommunizieren über definierte Schnittstellen mit einer oder mehreren Vermittlungseinrichtungen, den Mobilvermittlungsstellen, über die u.a. auch der Übergang zu anderen Kommunikationsnetzen erfolgt. Die Mobilvermittlungsstellen bilden gemeinsam mit einer Mehrzahl von Datenbanken das Vermittlungssystem (Switching Subsystem) des Mobil-Kommunikationssystems.

Neben den obigen Netzeinrichtungen existieren ein oder mehrere Betriebs- und Wartungszentren (Operation and Maintenance Centers, OMC), die u.a. zum Konfigurieren und Überwachen der Netzeinrichtungen dienen. Überwachungsmaßnahmen und Konfigurierungsmaßnahmen werden hierzu meist von einem der Betriebs- und Wartungszentren aus ferngesteuert, die üblicherweise im Bereich der Mobilvermittlungsstellen angeordnet sind. Ein Betriebs- und Wartungszentrum kommuniziert dabei jeweils mit einem Basisstationssystem oder Vermittlungssystem über eine definierte Schnittstelle. Eine weitere Aufgabe des Betriebs- und Wartungssystems ist die Durchführung des Konfigurationsmanagements (Configuration Management), das neben dem Fehlermanagement einen von fünf Managementfunktionsbereichen darstellt, die die TMN-Prinzipien identifizieren. Das Konfigurationsmanagement definiert eine Reihe von Diensten, die eine Änderung der Struktur und damit eine Änderung des Verhaltens eines Telekommunikationsnetzes durch den Bediener ermöglichen. Diese Dienste beziehen sich üblicherweise auf Klassen und Instanzen von gemanagten Objekten, die insgesamt die netzspezifische Managementinformationsbasis bilden.

Ein gemanagtes Objekt im Sinne des Konfigurationsmanagements ist eine logische Abstraktion einer Ressource im Mobil-Kommunikationssystem. Hierbei wird unterschieden zwischen hardware-bezogenen gemanagten Objekten, die eine herstellerspezifische Realisierung einer Funktion beschreiben, und funktionsbezogenen gemanagten Objekten, bei denen es sich jeweils um die Abstraktion einer herstellerunabhängigen Funktiorialität handelt.

Bei dem vorliegenden Ausführungsbeispiel erfolgt eine Erweiterung des Management-Notification-Dienstes durch Einführung zusätzlicher Parameter für die Objektauswahl in Anlehnung an die sogenannte Scoping-Funktionalität (bzw. Bereichs-Funktionalität). Die Scoping-Funktionalität ist im Standard ITU-T X.710 definiert. Ausgehend vom jeweiligen Containment-tree des Objektmodells an der Manager-Agent-Schnittstelle, können vom Agent gesendete Benachrichtigungen bzw. Notifications verschiedene Kriterien zur Auswahl mehrerer Objekte verwenden.

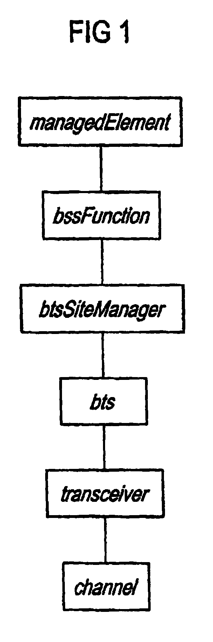

Beispielhaft wird hier in Fig. 1 der "containment tree" des Netzelementes Basisstationssystem (BSS) gezeigt, der gemäß Standard ETSI GSM 12.20 definiert ist. Skizziert sind das "root" (Anfang) des "containment tree" (managedElement), dem als untergeordnete Objektklassen die Basisstationssystem-Funktion (bssFunction) und der "Ortmanager" (btsSiteManager) für die hier beispielhaft ausgewählte Startebene zugeordnet sind. Dem schließen sich in weiterer Abfolge des "containment tree" die Objektklassen Basistransceiverstation (bts), Empfänger-/Sendereinrichtungen (transceiver) und Kanäle (channel) an. Dabei ist bts eine standardisierte Objektklasse in der GSM-Welt (bts: base transceiver station).

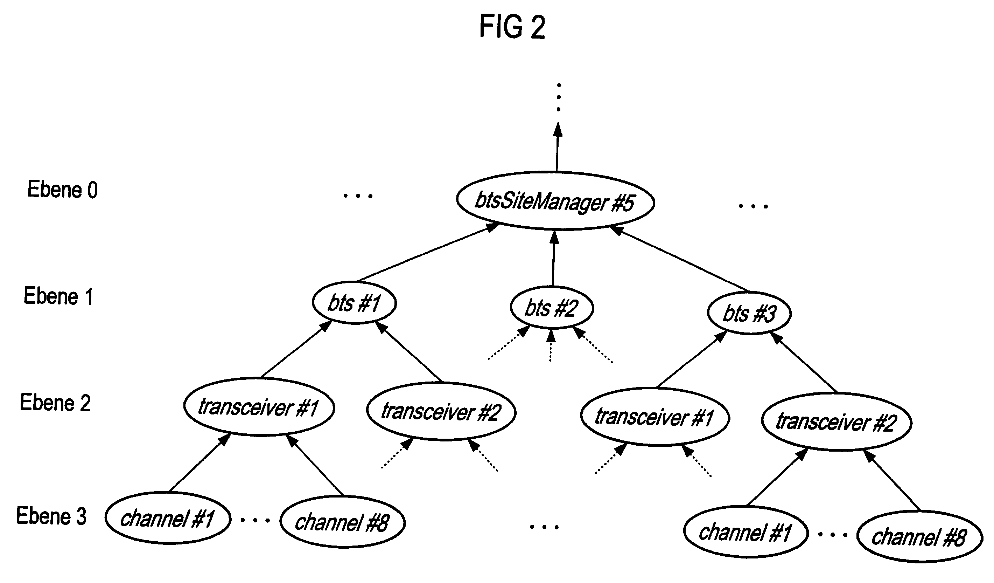

Der im Standard ITU-T X.710 definierte Dienst wird um drei Parameter erweitert, die nachfolgend anhand von Fig. 2 erläutert werden. Dabei werden folgende Begriffe verwendet:
1) Basisobjektklasse (base object class) / Ausgangsobjektklasse: Dieser Parameter gibt die Objektklasse an, die als Startebene (Ebene 0) für die Objektauswahl in Containment tree gilt. Dies ist in Fig. 2 z.B. die Objektklasse Lagemanager bzw. btsSiteManager.
2) Basisobjektinstanz (base object instance) / Ausgangspunkt: Dieser Parameter definiert die Objektinstanz und wird hier als root oder Wurzelobjekt bezeichnet. Die Objektinstanz gilt hier als Startpunkt für die Objektauswahl im "containment tree" und ist in Fig. 2 als beispielsweise "btsSiteManager-Instanz #5" von einer Vielzahl von möglichen btsSiteManager-Instanzen der Ebene 0 dargestellt.
3) Bereich (Scope):
   Vom vorher definierten Wurzelobjekt ausgehend, spezifiziert der Parameter Scope, wie die Objektinstanzen, auf die sich eine im Manager empfangene Agent-Notification bezieht, vom Manager im "Containment tree" zu finden sind. Die möglichen Auswahlkriterien sind beispielsweise:
   a) Nur das Wurzelobjekt (Basisobjektinstanz, Ebene 0). In diesem Fall bezieht sich die Notification (z.B. object creation) nur auf das Wurzelobjekt (z.B. Instanz btsSiteManager #5) und entspricht dem jetzigen Manager-Ereignisbericht bzw. M-EVENT-REPORT.
   b) Alle Objektinstanzen, die sich auf der dem Wurzelobjekt untergeordneten Ebene n (z.B. Ebene n = 2) befinden. Diese Option kann z.B. in folgenden Fällen benutzt werden:
      * Bei einer Objekterzeugung/löschung (object creation/object deletion) von gleichen Instanzen einer Objektklasse, wie z.B. beim impliziten Erzeugen mehrerer zugeordneter Instanzen zusammen mit der Erzeugung einer Objektklasse, oder
      * bei einer Attributwertänderung/Zustandsänderung (attribute value change / state change) bei gleichen Attributen bzw. Zuständen von Instanzen auch verschiedener Objektklassen.
      Als Beispiel für die dem Wurzelobjekt (btsSiteManager-Instanz #5) untergeordnete Ebene 2 (n = 2) bezieht sich eine Notification, wie z.B. eine Attributwertänderungs-Nachricht nach einem bereichsbezogenen Attributwertänderung-Kommando des Managers (scoped M-SET), auf gleiche Attribute aller Transceiver-Instanzen unter dem entsprechenden Lagemanager, hier z.B. dem Lagemanager btsSiteManager #5 in der Ebene 0. Folglich sind in Fig. 2 die entsprechenden Transceiver mit gleichen Attributen auf der Ebene 3 betroffen, und zwar
      * die Transceiver #1 und #2 der bts-Instanz #1,
      * die Transceiver #1, #2 und #3 der bts-Instanz #2, wobei deren Verbindungen zur Ebene 1 in Fig. 2 nur angedeutet sind, und
      * die Transceiver #1 und #2 der bts-Instanz #3.
   c) Das Wurzelobjekt und alle ihm untergeordneten Objektinstanzen bis einschließlich Ebene n. Diese Option eignet sich z.B. für Attributwertänderungen und/oder Zustandsänderungen bei gleichen Attributen/Zuständen von Instanzen auch verschiedener Objektklassen.
      Bei zum Beispiel dem Wurzelobjekt und allen Ebenen bis zur ersten Ebene darunter (n = 1) bezieht sich eine Notification, z.B. zur Zustandsänderung, auf gleiche Attribute der in Fig. 2 dargestellten btsSiteManager-Instanz #5, und aller untergeordneten Bts-Instanzen #1, #2 und #3.
   d) Das Wurzelobjekt und alle untergeordneten Objektinstanzen im Einschließungsbauin /containment tree. Diese Option eignet sich z.B. ebenfalls für Attributwertänderungen und/oder Zustandsänderungen, in diesem Fall auch bei gleichen Attributen / Zuständen von Instanzen auch verschiedener Objektklassen.

Wenn der Parameter Bereich (Scope) in der Benachrichtigung bzw. Notification nicht angegeben ist, gilt das erste Auswahlkriterium a). Die Benachrichtigung betrifft also nur das Wurzelobjekt, also den bisherigen M-Event-Report. Durch bestimmte festlegbare Parameterwerte des Bereichs werden entsprechend die anderen Auswahlkriterien b) - d) ausgewählt und jeweils konkretisiert.

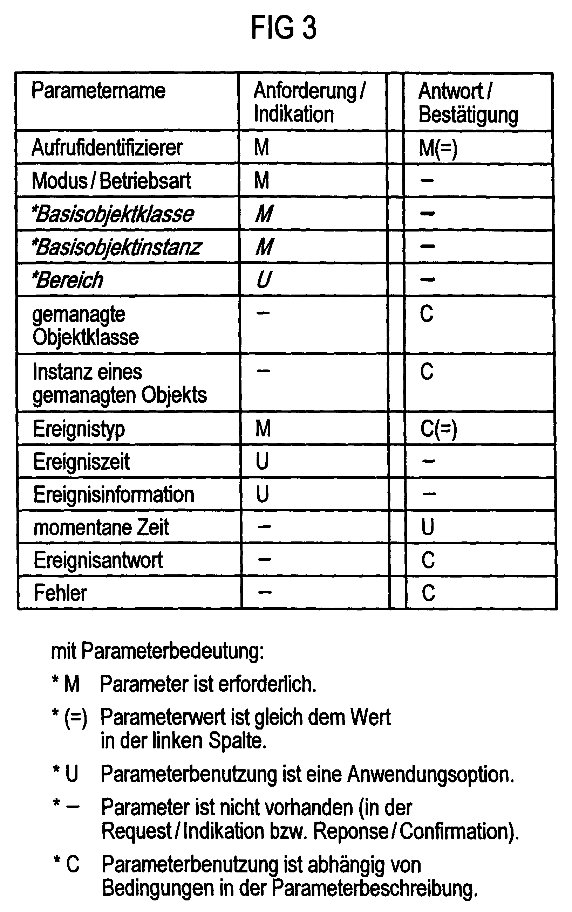

Eine beispielhafte Struktur des erweiterten Management-Benachrichtigungsdienstes, die auch als Manager-Ereignisse-Bericht bzw. M-EVENTS-REPORT bezeichnet werden kann, da mehrere Ereignisse über einen einzigen Bericht (Report) an den Manager übertragen werden, ist in der Tabelle der Fig. 3 angegeben. Die vorstehend definierten Erweiterungen sind dabei mit einem Sternchen und kursiv/fett markiert. Wie der derzeitige M-EVENT-REPORT, kann auch der erweiterte Dienst je nach Betriebsart vom Manager bestätigt werden (confirmed mode) oder nicht (unconfirmed mode).

Die Angabe der Werte für die Parameter "Basisobjektklasse" (Base object class) und "Basisobjektinstanz" (Base object instance) ist hier bei der Anforderung (request/indication) im erweiterten Management-Notification-Dienst erforderlich. Für den Parameter "Bereich" (Scope) sind die Angaben optional in Abhängigkeit einer entsprechend zugeordneten Anwenderoption zu setzen. Die Antwort bzw. Bestätigung enthält keine entsprechenden Parameterwerte.

Die anderen Parameter haben vorzugsweise die gleiche Bedeutung wie beim standardisierten CMISE-Dienst M-EVENT-REPORT.

Bei alternativen Ausführungsformen kann auch vorgesehen werden, daß z.B. ein unbesetzter Parameter "Bereich" den Standardbetrieb gemäß der jetztigen Norm auslöst.

Der hier definierte Management-Benachrichtigungsdienst hat somit - im Gegensatz zum derzeit standardisierten CMISE-Dienst M-EVENT-REPORT - den Vorteil, daß ein Agent dem Manager mehrere Ereignisse mit Hilfe einer einzigen Notification mitteilen kann. Damit wird die Anzahl der Nachrichten über die Manager-Agent-Schnittstelle wesentlich reduziert und die Netzmanagement-Funktionalität optimiert.

## Patentansprüche

1. Verfahren zur Nachrichtenübertragung an einer Schnittstelle in einer objektorientieren Umgebung, in der zwischen zumindest einem Agent und zumindest einem Manager Objektereignis-Nachrichten übermittelt werden, mittels derer jeweils ein einziges Ereignis mitgeteilt wird, dadurch gekennzeichnet, daß zumindest eine Objektereignisse-Nachricht vom Agent zum Manager übermittelt wird, die mehrere Ereignisse mitteilt.

2. Verfahren nach Anspruch 1, bei dem
die zumindest eine übermittelte Objektereignisse-Nachricht für das Management von Kommunikationssystemen, insbesondere Mobilfunk-Netzen verwendet wird.

3. Verfahren nach Anspruch 1 oder 2, bei dem
die zumindest eine übermittelte Objektereignisse-Nachricht eine erweiterte CMISE-Notification-Dienst-Nachricht ist.

4. Verfahren nach einem vorstehenden Anspruch, bei dem
zwei oder mehr, vorzugsweise drei Parameter für die Objektauswahl verwendet werden, wobei diese Parameter insbesondere eine Erweiterung durch zusätzliche Parameter für eine Objektauswahl entsprechend einer ITU-T X.710-Scoping-Funktionalität bilden.

5. Verfahren nach Anspruch 4, bei dem
zusätzliche Parameter vom containment tree eines zugrundeliegenden Objektmodells ausgehend verschiedene Kriterien zur Auswahl mehrerer Objektinstanzen und/oder Objektebenen enthalten.

6. Verfahren nach Anspruch 4 oder 5, bei dem
in einem zusätzlichen Parameter eine Ausgangsklasse (Ebene 0) festgelegt wird, die als Startebene für insbesondere eine Objektauswahl im containment tree gilt.

7. Verfahren nach einem der Ansprüche 4 - 6, bei dem
in einem zusätzlichen Parameter ein Ausgangspunkt (Ebene 0, btsSiteManager #5) festgelegt wird, der als Startpunkt für insbesondere eine Objektauswahl im containment tree gilt.

8. Verfahren nach einem der Ansprüche 4 - 7, bei dem
in einem zusätzlichen Parameter ein Bereich (Ebene 0, btsSiteManager #5; Ebene 1; Ebenen 0 - n; alle Ebenen) festgelegt wird, innerhalb dessen die Objektinstanzen, auf die sich die Objektereignisse-Nachricht bezieht, zu finden sind.

9. Verfahren nach Anspruch 8, bei dem
der Bereich bei fehlender Parametereingabe nur die Objektinstanz beim Ausgangspunkt (Ebene 0, btsSiteManager-Instanz #5) betrifft.

10. Verfahren nach Anspruch 8 oder 9, bei dem
der Bereich nur Ereignisse bei Objektinstanzen einer bestimmten Objektebene (Ebene 2) betrifft.

11. Verfahren nach einem der Ansprüche 8 - 10, bei dem
der Bereich nur Ereignisse bei Objektinstanzen vom Ausgangspunkt bis zu einschließlich einer bestimmten Objektebene (Ebenen 0 - n) betrifft.

12. Verfahren nach einem der Ansprüche 8 - 10, bei dem
der Bereich nur Ereignisse bei Objektinstanzen aller Objektebenen (alle Ebenen) betrifft.

13. Kommunikationssystem, insbesondere zum Durchführen eines Verfahrens nach einem der vorstehenden Ansprüche, mit
- zumindest einem Manager und
- zumindest einem Agenten in einer objekt-orientierten Umgebung mit mehreren Objektinstanzen in verschiedenen Ebenen (Ebenen 0 - 3),
- zumindest einer Schnittstelle, über die ein Agent Objektereignis-Nachrichten übermittelt, die Informationen über Ereignisse im Bereich einer einzelnen Objekzinstanz enthalten, und
- zumindest einer Nachrichten-Verwaltungseinrichtung zum Verwalten der Objektereignis-Nachrichten,
dadurch gekennzeichnet,
daß die zumindest eine Nachrichten-Verwaltungseinrichtung zum Verwalten von Objektereignisse-Nachrichten, die jeweils Informationen zu mehreren Ereignissen, die sich insbesondere auf verschiedene Objektinstanzen auch von unterschiedlichen Objektklassen beziehen, enthalten ausgelegt ist.

14. Kommunikationssystem nach Anspruch 13, bei dem
die zumindest eine Nachrichten-Verwaltungseinrichtung Speichereinrichtungen zum Speichern und Bearbeitungseinrichtungen zum Bearbeiten zumindest einer Objektereignisse-Nachricht, die jeweils Informationen zu mehreren Ereignissen enthält, aufweist.

15. Kommunikationssystem nach Anspruch 13 oder 14, das als Funk-Kommunikationssystem ausgebildet ist.
